# EUROPÄISCHE PATENTSCHRIFT

(11) **EP 4 223 437 B1**
(45) Veröffentlichungstag und Bekanntmachung des Hinweises auf die Patenterteilung: **22.05.2024**
(21) Anmeldenummer: 22020036.4
(22) Anmeldetag: 07.02.2022
(51) Int. Cl.: B22F 10/16, B22F 10/47, B22F 10/64, B33Y 10/00, B33Y 30/00, C04B 35/119, B22F 10/12, B32B 18/00, C04B 35/638

(54) **VERFAHREN UND VORRICHTUNG ZUR ADDITIVEN FERTIGUNG EINES BAUTEILS**
METHOD AND DEVICE FOR ADDITIVE PRODUCTION OF A COMPONENT
PROCÉDÉ ET DISPOSITIF DE FABRICATION ADDITIVE D'UN COMPOSANT

(43) Veröffentlichungstag der Anmeldung: 09.08.2023
(73) Patentinhaber: Incus GmbH, 1220 Wien (AT)
(72) Erfinder: Mitteramskogler, Gerald, 1020 Wien (AT); Veigl, Christian, 1110 Wien (AT)
(74) Vertreter: Keschmann, Marc

(56) Entgegenhaltungen:
- EP-B1- 3 056 301
- US-A1- 2018 169 943
- US-A1- 2021 146 440
- US-A1- 2021 252 780
- US-B2- 11 117 192

## Beschreibung

Die Erfindung betrifft ein Verfahren zur additiven Fertigung wenigstens eines metallischen oder keramischen Bauteils, umfassend:
a) Schichtweises Aufbauen wenigstens eines Grünteils in einer Druckvorrichtung aus mehreren Grünteilschichten, wobei für jede Grünteilschicht folgende Schritte ausgeführt werden:
   - Auftragen einer Schicht eines polymerisierbaren, mit Keramik- oder Metallpartikeln versetzten Materials, um eine Materialschicht zu bilden,
   - ortsselektives Polymerisieren der Materialschicht, um eine ortsselektiv polymerisierte Grünteilschicht zu erhalten, wobei die Grünteilschicht umgebend eine unpolymerisierte Materialmenge verbleibt,
      sodass das wenigstens eine Grünteil in einem Materialblock unpolymerisierten Materials erhalten wird,
b) Entnehmen des wenigstens einen Grünteils aus der Druckvorrichtung,
c) Entfernen des unpolymerisierten Materials vom Grünteil,
d) Entbindern des wenigstens einen Grünteils, und
e) Sintern des wenigstens einen Grünteils, um das Bauteil zu erhalten.

Die Erfindung betrifft weiters eine Vorrichtung zur stereolithographischen additiven Fertigung von metallischen oder keramischen Grünteilen, mit welchem ein Verfahren der oben genannten Art durchgeführt werden kann.

Bei der stereolithographischen additiven Fertigung von metallischen und keramischen Bauteilen wird das Bauteil durch schichtweises Polymerisieren eines metall- oder keramikgefüllten, photoploymerisierbaren Schlickers hergestellt, das so erhaltene Grünteil von dem ihn umgebenden, nicht polymerisierten Material getrennt und dann in einem Ofen entbindert, wodurch das organische polymerisierte Material abgebrannt wird. Es verbleibt ein metallischer bzw. keramischer Körper, der abschließend gesintert wird.

Bei herkömmlichen Verfahren ist es notwendig, die Grünteile nach dem schichtweisen Druckprozess manuell in die nachfolgenden Prozessschritte zu überführen. Dazu gehört das Entfernen des überschüssigen, nicht ausgehärteten Materials, die Feinreinigung sowie die richtige Platzierung der Grünteile für den Entbinder- und Sinterprozess. Bei jeder manuellen Handhabung besteht das Risiko die Grünteile zu deformieren oder zu zerstören.

Weiters werden für die Sicherstellung der finalen Bauteilgeometrie nach dem Sintern oftmals Stützstrukturen benötigt. Diese dienen dazu, den Verzügen während des Sinterns entgegenzuwirken. Die Ausprägung der Stützstrukturen ist abhängig von der Bauteilgeometrie sowie der Orientierung der Bauteile während des Sinterns.

Derzeitige additive Fertigungsverfahren verfolgen unterschiedliche Ansätze, um mit diesen Problemen umzugehen. Eine Lösungsvariante sieht vor, die Bauteile direkt beim Herstellungsprozess mit Stützstrukturen zu versehen. Dies bedeutet, dass die Stützstrukturen mit der Oberfläche der Bauteile verbunden sind und nach dem Sintern manuell entfernt werden müssen. Das mechanische Entfernen beeinträchtigt die Oberflächenqualität signifikant und limitiert die Möglichkeit der einsetzbaren Funktionsflächen.

Ein weiterer Lösungsansatz besteht darin, die Bauteile sintergerecht zu konstruieren. Dies führt jedoch zu einer drastischen Reduzierung der Designfreiheit.

Weiters ist es möglich, die Stützstrukturen aus demselben Material wie die Grünteile als gesonderte Teile zu drucken. Beim Entbinder- und Sinterprozess wird dann zwischen dem Grünteil und seinen Stützstrukturen eine keramische Pulverschicht aufgetragen, die ein unerwünschtes Zusammenbacken des Grünteils mit den Stützstrukturen verhindert. Da sowohl die Grünteile als auch die Stützstrukturen beim Sinterprozess schrumpfen, können die Stützstrukturen jedoch nicht für einen neuerlichen Druckprozess für gleichartige Grünteile wiederverwendet werden.

Die Erfindung zielt daher darauf ab, die oben angeführten Nachteile zu überwinden und ein Verfahren der eingangs genannten Art dahingehend weiterzubilden, dass die Handhabung der Grünteile vereinfacht und eine Abstützung der Grünteile während des Sinterns ermöglicht wird.

Zur Lösung dieser Aufgabe sieht die Erfindung bei einem Verfahren der eingangs genannten Art im Wesentlichen vor,
- dass vor Schritt a) eine Unterstützungsschicht auf eine Ausnehmungen aufweisende Fläche einer Druckunterlage aufgetragen wird, sodass das Grünteil in Schritt a) auf der Unterstützungsschicht schichtweise aufgebaut wird,
- das wenigstens eine Grünteil in Schritt b) auf der Druckunterlage liegend aus der Druckvorrichtung entnommen wird und
- das in Schritt c) entfernte unpolymerisierte Material in den Ausnehmungen der Druckunterlage aufgefangen oder durch die Ausnehmungen abgeleitet wird.

Das Grünteil wird somit abweichend von bisherigen Verfahren nicht auf einer ebenen Bauplattform schichtweise aufgebaut, sondern auf einer gesonderten Druckunterlage, die an ihrer dem aufzubauenden Grünteil zugewandten Fläche Ausnehmungen aufweist und daher eine nicht-ebene Auflagefläche bereitstellt. Um hierbei dennoch einen ebenen Untergrund für den schichtweisen Aufbau des Grünteils zur Verfügung zu stellen, wird erfindungsgemäß eine Unterstützungsschicht auf die nicht ebene Auflagefläche der Druckunterlage aufgebracht. Die Druckunterlage dient als Unterlage für den schichtweisen Aufbau des Grünteils und wird zusätzlich als Unterlage für die weiteren Prozessschritte (Post-Prozesse) verwendet. Insbesondere verbleibt das Grünteil für die Entnahme aus der Druckvorrichtung und für die Abreinigung des unpolymerisierten Materials auf der Druckunterlage, vorteilhafterweise auch während des Entbinderns und des Sinterns. Dadurch, dass das Grünteil für die Durchführung von Post-Prozess-Schritten auf der Druckunterlage verbleibt, kann die Handhabung sowie Positionierung des Grünteils zum Beispiel von Industrierobotern oder mechatronischen Systemen übernommen werden, deren Greifer die Druckunterlage auf Grund ihrer Formstabilität, vordefinierten Größe und Position ohne weiteres zu ergreifen in der Lage sind. Durch die definierte Geometrie und Position der Druckunterlage wir die Möglichkeit geschaffen, den Prozess der additiven Bauteileherstellung zu automatisieren.

Die Druckunterlage besteht vorzugweise aus einem Material, das bei den üblichen Sintertemperaturen von z.B. ≥ 1.000 °C keinem Schrumpfen unterworfen ist, sodass diese nach der abgeschlossenen Prozesskette wiederverwendbar ist. Weitere Anforderungen an das Material der Druckunterlagen umfassen die physikalische (keine Änderung der Härte, Farbe, etc.) und chemische Stabilität, insbesondere unter Sintertemperaturen von z.B. ≥ 1.000 °C.

Dadurch, dass die Druckunterlage auf der dem Grünteil zugewandten Seite eine Auflagefläche mit Ausnehmungen aufweist, dient die Druckunterlage während der Entfernung des unpolymerisierten Materials als Filter oder Sieb, durch welches das unpolymerisierte Material abrinnen bzw. abtropfen kann, während das Grünteil zurückgehalten wird. Die Ausnehmungen können beispielsweise als Öffnungen ausgeführt sein und/oder sie können Kanäle oder Rinnen umfassen oder mit diesen in Verbindung stehen.

Die Entfernung des unpolymerisierten Materials vom Grünteil erfolgst vorzugweise durch Wärmeeinwirkung, wodurch die Viskosität des bei Raumtemperatur üblicherweise hochviskosen unpolymerisierten Materials verringert und die Fließfähigkeit erhöht wird. Die Materialentfernung kann aber auch das Abwaschen des unpolymerisierten Materials mittels eines Waschmediums oder die Verwendung eines Lösungsmittels umfassen.

Eine bevorzugte Ausbildung der Erfindung sieht in diesem Zusammenhang vor, dass die Unterstützungsschicht aus dem polymerisierbaren, mit Keramik- oder Metallpartikeln versetzten Material hergestellt wird. Die auf der Druckunterlage erzeugte Unterstützungsschicht besteht somit aus demselben Material wie die Materialschichten, die zur Herstellung der Grünteilschichten aufgetragen werden. Die Unterstützungsschicht wird hierbei unpolymerisiert gelassen, sodass diese nach der Herstellung des Grünteils mit demselben Verfahren und gleichzeitig wie das das Grünteil umgebende unpolymerisierte Material entfernt werden kann. Auf Grund des Entfernens der Unterstützungsschicht kommt das Grünteil direkt auf der Druckunterlage zu liegen und wird dort vorzugsweise in einer vorgegebenen Position und/oder Ausrichtung gehalten.

Die Unterstützungsschicht kann aber auch mit anderen Mitteln entfernt werden als das das Grünteil umgebende unpolymerisierte Material, solange gewährleistet ist, dass die Unterstützungsschicht vor Schritt d) oder e) entfernt wird, vorzugsweise durch Abfließenlassen des Materials.

Gemäß einer bevorzugten Ausführungsform der Erfindung ist vorgesehen, dass die Ausnehmungen Flächen aufweisen, die eine Negativform des Bauteils oder Abschnitte der Negativform ausbilden. Die Anpassung der Ausnehmungen der Druckunterlage an die Form der zu produzierenden Bauteile führt dazu, dass die Bauteile bzw. die Grünteile formschlüssig in der Druckunterlage aufgenommen werden können, sodass eine definierte Orientierung der Bau- bzw. Grünteile während des Prozesses oder nach dem Prozess sichergestellt ist. Dies wiederum erleichtert die visuelle Überprüfung und Qualitätssicherung der Bauteile mittels elektronischen Bilderfassungssystemen, was einen weiteren Vorteil für die Automatisierung mit sich bringt. Weiters sind die Grün- bzw. Bauteile in den formangepassten Ausnehmungen während der Handhabung der Druckunterlage z.B. durch Manipulatoren gegen eine Verlagerung oder ein Herausfallen gesichert.

Beim Sinterprozess schrumpfen die Grünteile um einen definierten Faktor in X, Y sowie Z-Richtung und es besteht die Gefahr, dass im Zuge des Schrumpfungsvorganges ungewünschte Verformungen auftreten. Wenn die Grünteile während des Sinterprozesses jedoch in den die Negativform des jeweils gewünschten Bauteils aufweisenden Ausnehmungen der Druckunterlage liegen, wird zumindest in den an der Negativform anliegenden Bereichen des Grünteils eine ungewünschte Verformung verhindert. Die Druckunterlage dient beim Sinterprozess somit als Sinterstützstruktur.

In bevorzugter Weise gelangen die Grünteile lediglich durch die Wirkung der Schwerkraft in die jeweilige Ausnehmung. Zu diesem Zweck ist unterhalb jedes Grünteils jeweils eine eigene Ausnehmung angeordnet. Um ein selbsttätiges Herabfallen der Grünteile in ihre zugehörigen Ausnehmungen zu erreichen, ist bevorzugt vorgesehen, dass die Unterstützungsschicht wenigstens eine der Ausnehmungen überbrückend auf den Materialträger aufgetragen wird, sodass das Grünteil in Folge der Entfernung der Unterstützungsschicht durch Herabfallen in Anlage an die Negativform gelangt.

Gemäß einem zweiten Aspekt betrifft die Erfindung eine Vorrichtung zur stereolithographischen additiven Fertigung von metallischen oder keramischen Grünteilen, insbesondere zur Durchführung des erfindungsgemäßen Verfahrens, umfassend:
- eine Unterlage für eine Materialschicht eines zu polymerisierenden Materials, deren Oberfläche eine Bauebene ausbildet,
- eine Bauplattform, die zwischen einer mit der Bauebene bündigen Position und einer abgesenkten Position senkrecht zur Bauebene verfahrbar ist,
- eine parallel zur Bauebene verfahrbare Rakel zum Auftragen der Materialschicht auf der Bauebene, und
- eine Belichtungseinheit zur ortsselektiven Belichtung der Materialschicht oberhalb der Bauplattform oder auf einem auf der Bauplattform teilweise aufgebauten Grünteil,
wobei eine Druckunterlage entnehmbar auf der Bauplattform angeordnet ist, die eine Ausnehmungen aufweisende Fläche aufweist, auf welche vor dem Aufbauen des Grünteils eine Unterstützungsschicht aufbringbar ist.

Die Erfindung wird nachfolgend anhand von in der Zeichnung schematisch dargestellten Ausführungsbeispielen näher erläutert. In dieser zeigen
- Fig. 1 eine Schnittdarstellung einer auf die Bauplattform eingelegten Druckunterlage in einer Ausgangsposition,
- Fig. 2 das Auftragen einer Unterstützungsschicht auf die Druckunterlage,
- Fig. 3 und 4 den Herstellungsprozess der Grünteile,
- Fig. 5 die entnommene Druckunterlage samt der im Materialblock eingebetteten Grünteile,
- Fig. 6 den Reinigungsprozess der Grünteile,
- Fig. 7 den Zustand nach Abschluss des Reinigungsprozesses;
- Fig. 8 und 9 den Entbinder- und Sinterprozess,
- Fig. 10 eine isometrische Darstellung einer Ausführungsform der Druckunterlage,
- Fig. 11 eine isometrische Darstellung einer abgewandelten Ausführungsform der Druckunterlage,
- Fig. 12 eine isometrische Darstellung einer weiteren abgewandelten Ausführungsform der Druckunterlage,
- Fig. 13 eine isometrische Darstellung einer weiteren abgewandelten Ausführungsform der Druckunterlage,
- Fig. 14 eine isometrische Darstellung einer weiteren abgewandelten Ausführungsform der Druckunterlage,
- Fig. 15 eine isometrische Darstellung einer weiteren abgewandelten Ausführungsform der Druckunterlage,
- Fig. 16 eine isometrische Darstellung einer weiteren abgewandelten Ausführungsform der Druckunterlage,
- Fig. 17 eine isometrische Darstellung einer weiteren abgewandelten Ausführungsform der Druckunterlage,
- Fig. 19 eine isometrische Darstellung einer weiteren abgewandelten Ausführungsform der Druckunterlage,

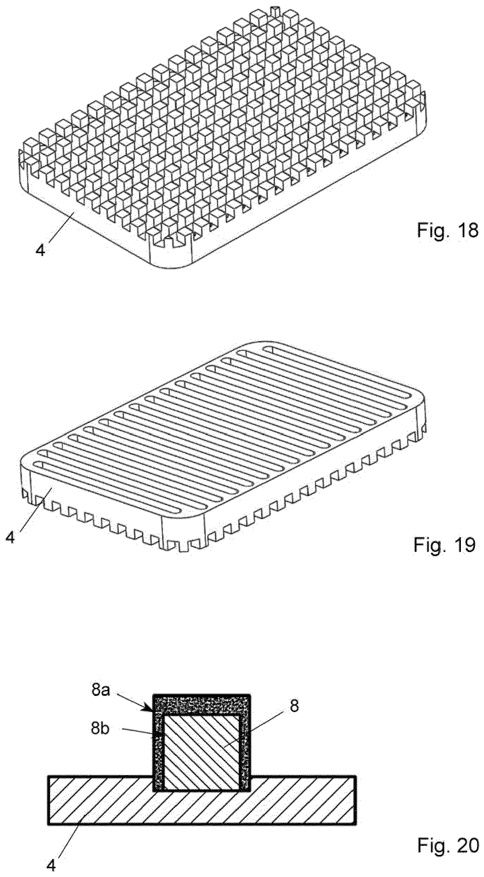

- Fig. 19 eine isometrische Darstellung einer weiteren abgewandelten Ausführungsform der Druckunterlage,
- Fig. 20 eine geschnittene Darstellung eines rechteckigen Bauteils auf der Druckunterlage,

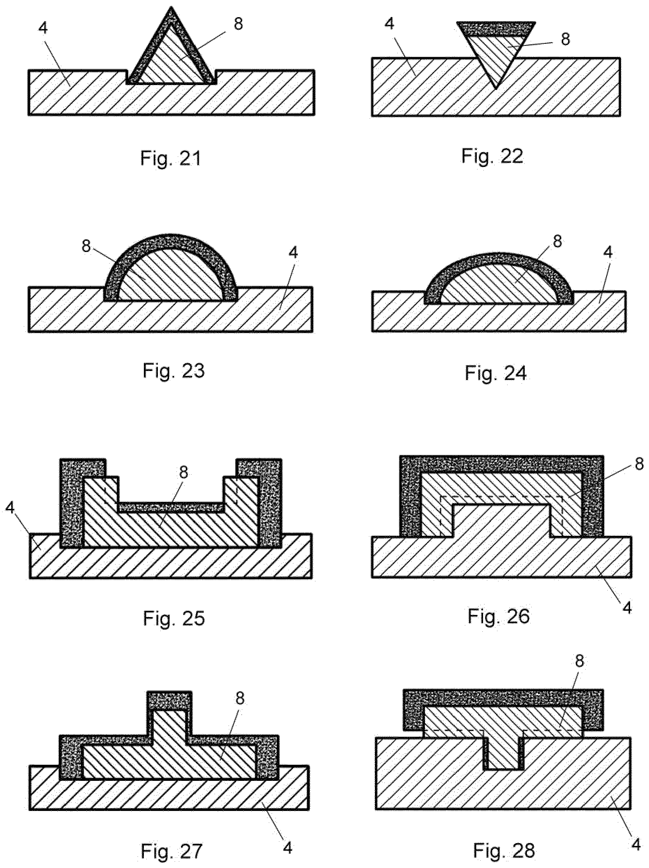

- Fig. 21 eine geschnittene Darstellung eines dreieckigen Bauteils auf der Druckunterlage,
- Fig. 22 ist eine geschnittene Darstellung eines umgedrehten, dreieckigen Bauteils auf der Druckunterlage,
- Fig. 23 eine geschnittene Darstellung eines halbrunden Bauteils auf der Druckunterlage,
- Fig. 24 eine geschnittene Darstellung eines ellipsenförmigen Bauteils auf der Druckunterlage,
- Fig. 25 eine geschnittene Darstellung eines U-förmigen Bauteils auf der Druckunterlage,
- Fig. 26 eine geschnittene Darstellung eines umgedrehten, U-förmigen Bauteils auf der Druckunterlage,
- Fig. 27 eine geschnittene Darstellung eines umgedrehten, T-förmigen Bauteils auf der Druckunterlage,
- Fig. 28 eine geschnittene Darstellung eines T-förmigen Bauteils auf der Druckunterlage,

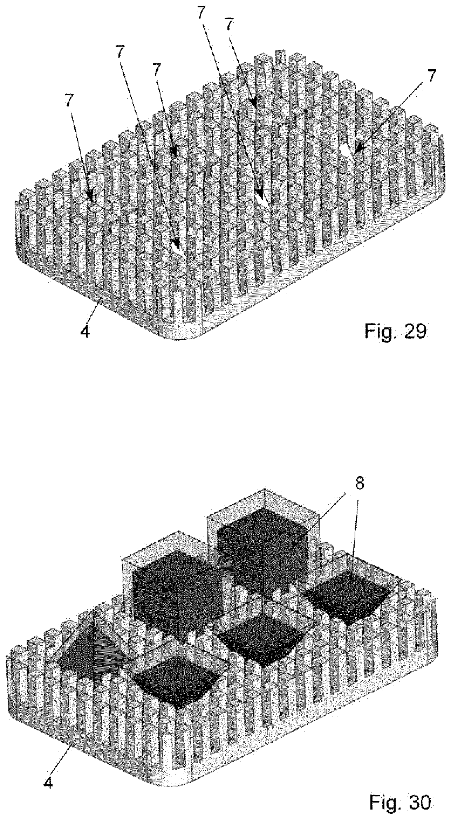

- Fig. 29 eine isometrische Darstellung der Druckunterlage mit an die Bauteile formangepassten Öffnungen, Rinnen sowie Negativformen,
- Fig. 30 eine isometrische Darstellung der Druckunterlage gemäß Fig. 29 mit den darauf liegenden Grünteilen,

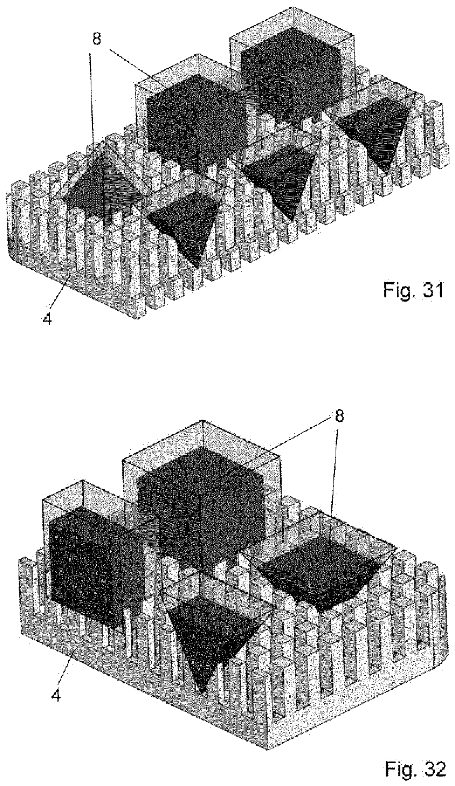

- Fig. 31 eine quer geschnittene, isometrische Darstellung der Druckunterlage gemäß Fig. 30, und
- Fig. 32 eine längs geschnittene, isometrische Darstellung der Druckunterlage gemäß Fig. 30.

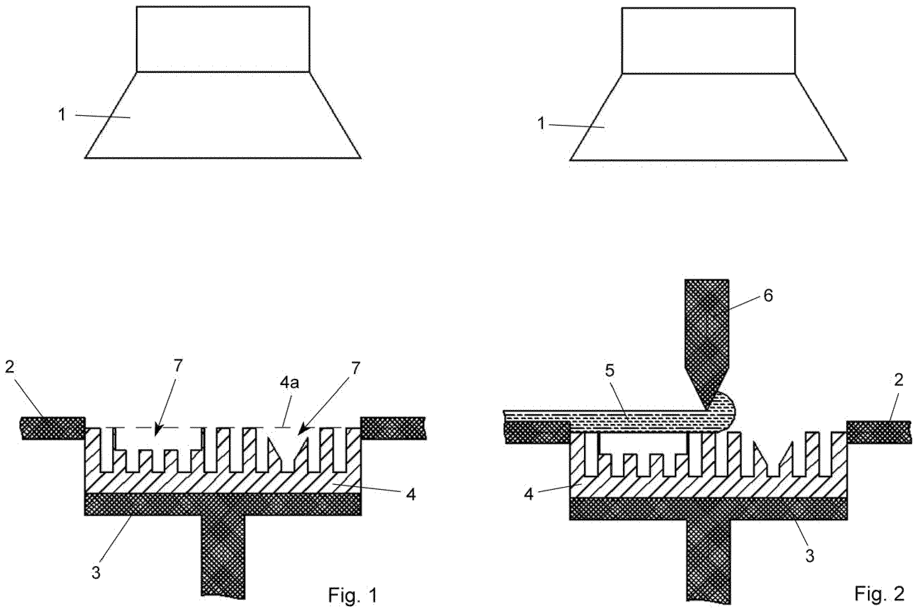

Fig. 1 zeigt eine erfindungsgemäße Vorrichtung zum additiven Fertigen von metallischen oder keramischen Bauteilen. Die Vorrichtung umfasst eine plattenartige Unterlage 2, deren Oberfläche eine Bauebene ausbildet. Im Bereich einer Öffnung der Unterlage 2 ist eine Bauplattform 3 mittels einer nicht dargestellten Hebe- und Senkvorrichtung zwischen einer mit der Bauebene bündigen Position und einer abgesenkten Position senkrecht zur Bauebene verfahrbar gehalten. Oberhalb der Bauplattform 3 ist eine Belichtungseinheit 1 zur ortsselektiven Belichtung einer Materialschicht angeordnet. Die Belichtungseinheit 1 kann beispielswiese als DLP-Projektor ausgebildet sein. Auf der Bauplattform 3 ist eine Druckunterlage 4 angeordnet, die eine Fläche 4a aufweist, auf welche vor dem Aufbauen des Grünteils eine Unterstützungsschicht 5 aufbringbar ist. Die Fläche 4a der Druckunterlage 4 weist eine Vielzahl von Ausnehmungen 7 auf.

Für die Aufbringung der Unterstützungsschicht 5 auf die Druckunterlage 4 ist eine parallel zur Bauebene verfahrbare Rakel 6 vorgesehen (Fig. 2), welche Material aus einem nicht dargestellten Bereich der Vorrichtung auf der Bauebene aufrakelt.

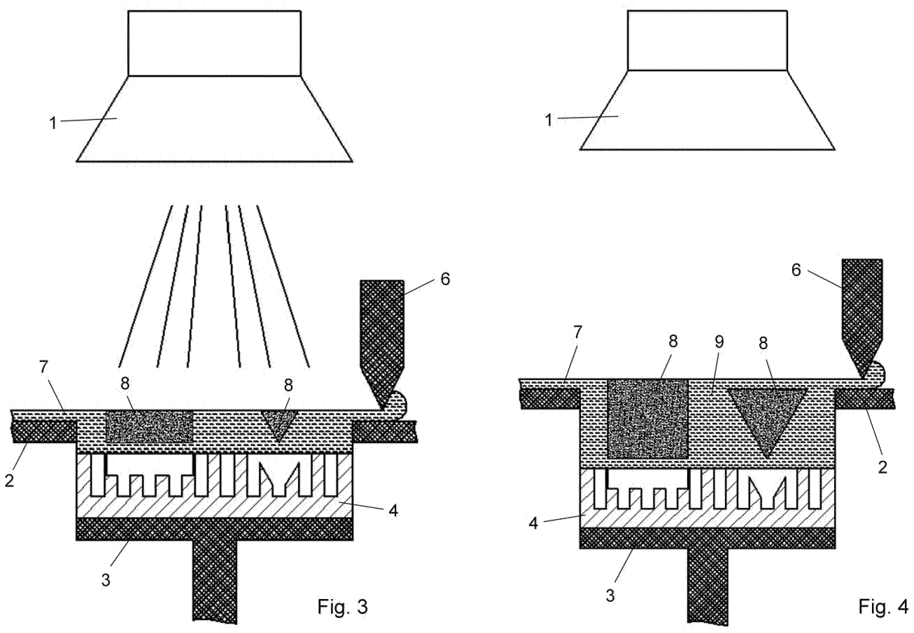

Wie anhand der Fig. 3 und 4 dargestellt, erfolgt der Aufbau eines Grünteils 8 schichtweise, wobei jeweils eine neue Materialschicht 7 mit der Rakel 6 aufgetragen wird, worauf die Materialschicht 7 mit der Belichtungseinheit 1 ortsselektiv belichtet wird, um die polymerisierbare Materialschicht 7 in denjenigen Bereichen zu polymerisieren bzw. zu verfestigen, die für den Aufbau des Grünteils 8 erforderlich sind. Nach jedem Schritt wird die Bauplattform 3 um einen der Schichtdicke der Materialschicht 7 entsprechenden Betrag abgesenkt, um auf diese Weise eine neue Materialschicht 7 auf die Oberfläche des teilweise aufgebauten Grünteils 8 auftragen zu können.

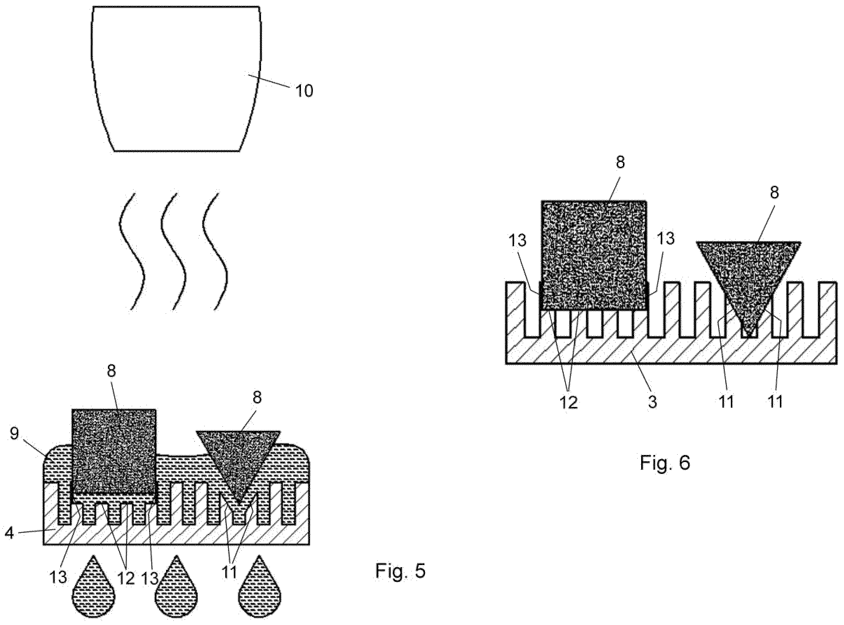

Die beschriebenen Schritte werden so lange wiederholt, bis die Grünteile 8 fertiggestellt sind (siehe Fig. 4). Die Grünteile 8 sind nach der Herstellung in einem Materialblock 9 aus unpolymerisiertem Material eingebettet und können durch das Abschmelzen des nicht ausgehärteten Materials freigelegt und gereinigt werden. Dies ist in Fig. 5 gezeigt. Für den Zweck der Reinigung wird die Druckunterlage 4 mit den darauf angeordneten Grünteilen 8 aus der Druckvorrichtung entnommen, d.h. von der Bauplattform abgehoben, und einer Wärmequelle 10 ausgesetzt, welche das unpolymerisierte Material fließfähig macht, sodass das Material von den Grünteilen 8 abrinnen kann. Bei dieser Grobreinigung dient die Druckunterlage 4 als Filter oder Sieb, durch welches das abfließende Material abrinnen bzw. abtropfen kann. Auch die Unterstützungsschicht 5 fließt hierbei ab, sodass die Grünteile 8 in die jeweils darunter liegende Ausnehmung der Druckunterlage 4 absinken.

Die Ausnehmungen weisen dabei Flächen auf, welche einer Negativform des jeweiligen Grün- oder Bauteils 8 entsprechen, sodass die Grünteile 8 an vordefinierten Positionen der Druckunterlage 4 formschlüssig und in definierter Orientierung gehalten werden. Der in Fig. 6 dargestellte Grünteil 8 mit dreieckigem Querschnitt liegt hierbei auf den Schrägflächen 11 auf und der in Fig. 6 dargestellte Grünteil 8 mit quadratischem Querschnitt liegt auf den unteren Flächen 12 und den Seitenflächen 13 an.

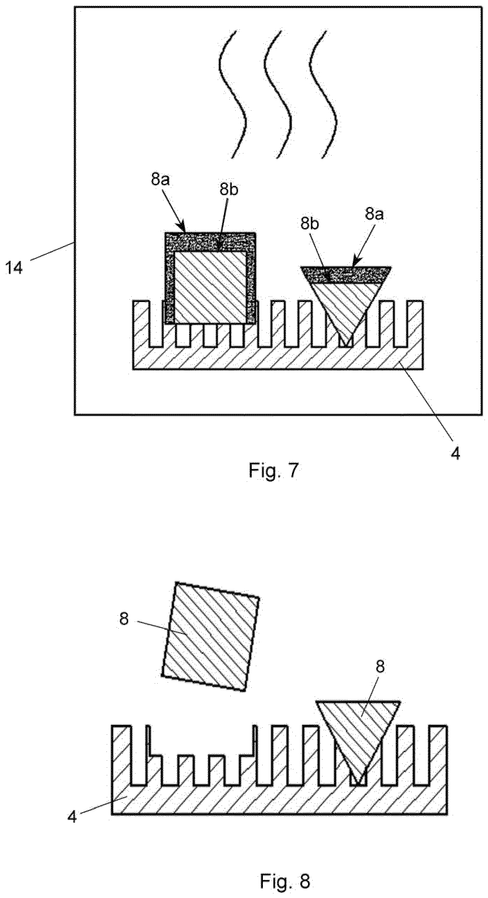

Bei dem in Fig. 7 dargestellten Sinterprozess schrumpfen die Grünteile 8 im Sinterofen 14 um einen definierten Faktor in X, Y sowie Z-Richtung. Dies wird in Fig. 7 durch den mit 8a bezeichneten Umriss des Grünteils 8 und den mit 8b bezeichneten, verkleinerten Umriss des fertigen Bauteils 8 verdeutlicht. Während des Sinterprozesses dient die Druckunterlage 4 als Negativform. Die schrumpfenden Bauteile werden in den Ausnehmungen der Druckunterlage 4 aufgenommen, wobei die flächige Anlage an die Negativform eine ungewünschte Verformung unterbindet.

Nach dem erfolgten Sinterprozess können die fertigen Bauteile 8 aus der Druckunterlage 4 entnommen werden, die Druckunterlage 4 gereinigt und dem nächsten Herstellungsprozess zugeführt werden (Fig. 8).

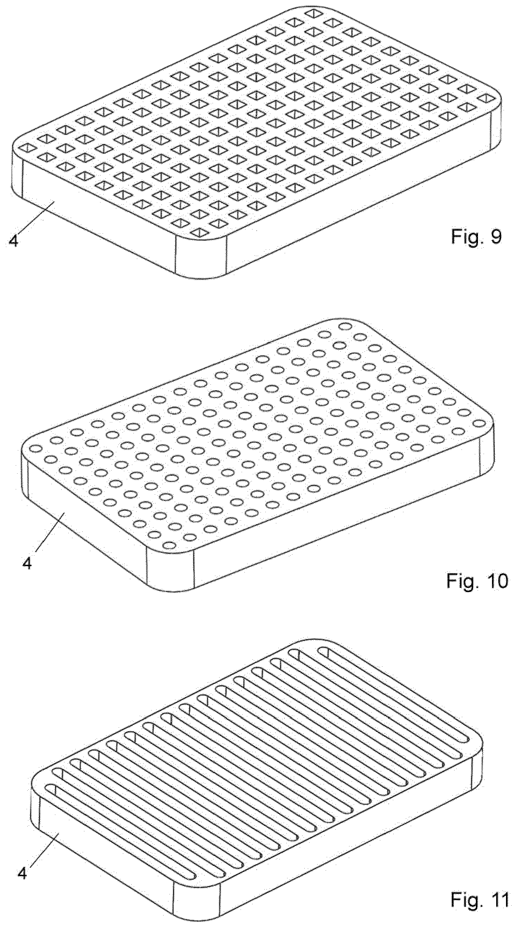

In den Fig. 9 bis 19 sind verschiedene Ausführungen der in der Druckunterlage 4 ausgebildeten Ausnehmungen veranschaulicht.

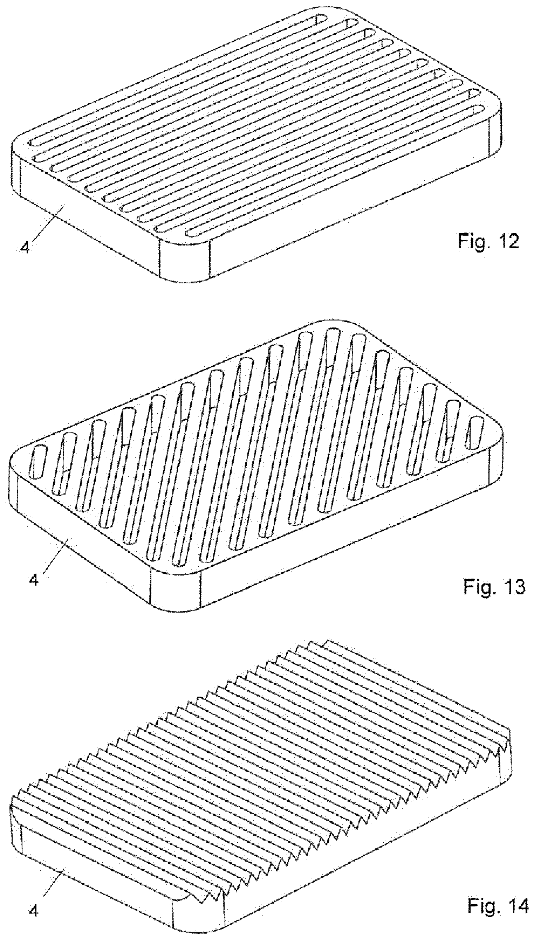

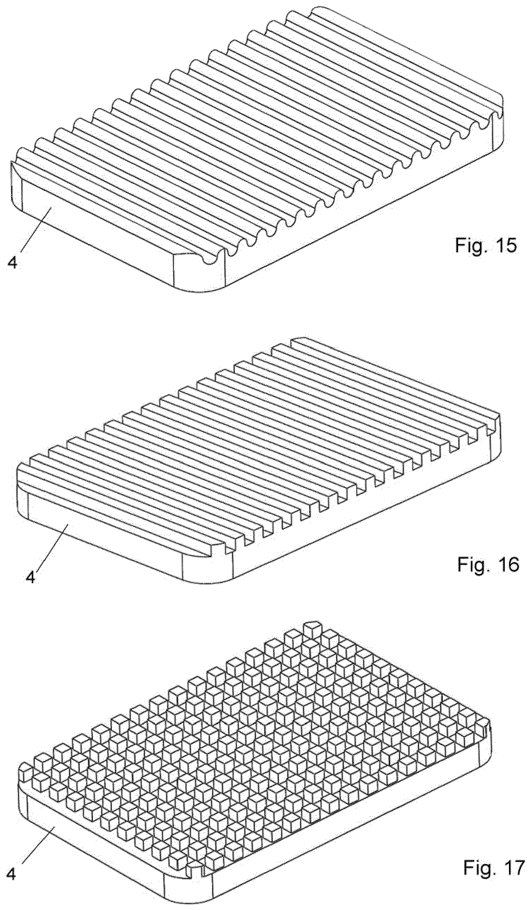

Fig. 9 zeigt die isometrische Darstellung der Druckunterlage 4 mit rechteckigen beziehungsweise quadratischen Öffnungen. Fig. 10 zeigt die isometrische Darstellung der Druckunterlage 4 mit kreisförmigen Öffnungen. Fig. 11 zeigt die isometrische Darstellung der Druckunterlage 4 mit geschlitzten Öffnungen parallel zur kurzen Seite. Fig. 12 zeigt die isometrische Darstellung der Druckunterlage 4 mit geschlitzten Öffnungen parallel zur langen Seite. Fig. 13 zeigt die isometrische Darstellung der Druckunterlage 4 mit schrägen, geschlitzten Öffnungen. In Fig. 14 ist die Druckunterlage 4 mit im Querschnitt dreieckigen ausgeformten Rinnen dargestellt, die parallel zur kurzen Seite verlaufen. Bei der Ausbildung gemäß Fig. 15 weisen die Rinnen einen runden Querschnitt auf. Bei der Ausbildung gemäß Fig. 16 weisen die Rinnen einen rechteckigen Querschnitt auf. Fig. 17 zeigt eine isometrische Darstellung der Druckunterlage 4 mit gekreuzten, im Querschnitt rechteckigen Rinnen, die parallel zur kurzen und langen Seite verlaufen. Fig. 18 und Fig. 19 zeigen eine isometrische Darstellung der Druckunterlage 4 mit einer Kombination aus gekreuzten, im Querschnitt rechteckigen Rinnen (Oberseite, Fig. 18) sowie zur kurzen Seite parallel geschlitzten Öffnungen (Unterseite, Fig. 19).

Fig. 20 bis 28 zeigen, dass die Ausnehmung 7 auf der Oberseite der Druckunterlage 4 als Negativform ausgebildet ist, welche an die finale Form der Bauteilgeometrie angepasst ist. Die Figuren zeigen jeweils die Druckunterlage 4 mit Negativform sowie das Bauteil 8 als Grünteil (8a) und Fertigteil (8b).

Fig. 20 zeigt eine Ausnehmung der Druckunterlage 4, welche an die rechteckige Form des Grünteils 8 angepasst ist. Fig. 21 bis 28 zeigen alternative Formgebungen des Grünteils 8 und der entsprechenden Negativform in der Druckunterlage 4, nämlich eine dreieckige Form (Fig. 21 ), eine umgedrehte Dreieckform (Fig. 22), eine Form mit halbkreisförmigem Querschnitt (Fig. 23), eine Form mit halbellipsenförmigem Querschnitt (Fig. 24), eine U-Form (Fig. 25), eine umgedrehte U-Form (Fig. 26), eine umgedrehte T-Form (Fig. 27) und eine T-Form (Fig. 28).

Fig. 29 bis 32 zeigt eine Ausführungsform der Druckunterlage 7, bei der eine Vielzahl von Öffnungen in einer rasterartigen Anordnung vorgesehen ist, wobei die Öffnungen mit Quer- und Längsrinnen in Verbindung stehen, welche ein Abfließen des unpolymerisierten Materials erlauben. Weiters sind relativ zur Oberfläche 4a der Druckunterlage 4 zurückversetzte Flächen vorgesehen, welche Ausnehmungen 7 ausbilden, in welche Grün- bzw. Bauteile 8 passen, wie dies insbesondere in den Schnittdarstellungen gemäß fig. 31 und 32 erkennbar ist.

## Patentansprüche

1. Verfahren zur additiven Fertigung wenigstens eines metallischen oder keramischen Bauteils, umfassend:
a) Schichtweises Aufbauen wenigstens eines Grünteils (8) in einer Druckvorrichtung aus mehreren Grünteilschichten, wobei für jede Grünteilschicht folgende Schritte ausgeführt werden:
- Auftragen einer Schicht eines polymerisierbaren, mit Keramik- oder Metallpartikeln versetzten Materials, um eine Materialschicht zu bilden,
- ortsselektives Polymerisieren der Materialschicht, um eine ortsselektiv polymerisierte Grünteilschicht zu erhalten, wobei die Grünteilschicht umgebend eine unpolymerisierte Materialmenge verbleibt,
sodass das wenigstens eine Grünteil (8) in einem Materialblock (9) unpolymerisierten Materials erhalten wird,
b) Entnehmen des wenigstens einen Grünteils (8) aus der Druckvorrichtung,
c) Entfernen des unpolymerisierten Materials vom Grünteil (8),
d) Entbindern des wenigstens einen Grünteils (8), und
e) Sintern des wenigstens einen Grünteils (8), um das Bauteil zu erhalten,
**dadurch gekennzeichnet, dass**
- vor Schritt a) eine Unterstützungsschicht (5) auf eine Ausnehmungen (7) aufweisende Fläche (4a) einer Druckunterlage (4) aufgetragen wird, sodass das Grünteil (8) in Schritt a) auf der Unterstützungsschicht (5) schichtweise aufgebaut wird,
- das wenigstens eine Grünteil (8) in Schritt b) auf der Druckunterlage (4) liegend aus der Druckvorrichtung entnommen wird und
- das in Schritt c) entfernte unpolymerisierte Material in den Ausnehmungen (7) der Druckunterlage (4) aufgefangen oder durch die Ausnehmungen (7) abgeleitet wird.

2. Verfahren nach Anspruch 1, **dadurch gekennzeichnet, dass** die Unterstützungsschicht (5) aus dem polymerisierbaren, mit Keramik- oder Metallpartikeln versetzten Material hergestellt wird.

3. Verfahren nach Anspruch 1 oder 2, **dadurch gekennzeichnet, dass** das Entfernen des unpolymerisierten Materials in Schritt c) das Abfließenlassen des Materials, vorzugsweise in Folge einer Wärmeeinwirkung, umfasst.

4. Verfahren nach Anspruch 1, 2 oder 3, **dadurch gekennzeichnet**, die Ausnehmungen (7) als Kanäle oder Rinnen ausgebildet sind oder mit diesen in Verbindung stehen.

5. Verfahren nach einem der Ansprüche 1 bis 4, **dadurch gekennzeichnet, dass** die Unterstützungsschicht (5) vor Schritt d) oder e) entfernt wird, vorzugsweise durch Abfließenlassen des Materials, beispielsweise in Folge einer Wärmeeinwirkung.

6. Verfahren nach einem der Ansprüche 1 bis 5, **dadurch gekennzeichnet, dass** die Ausnehmungen (7) Flächen (11, 12, 13) aufweisen, die eine Negativform des Bauteils oder Abschnitte der Negativform ausbilden.

7. Verfahren nach einem der Ansprüche 1 bis 6, **dadurch gekennzeichnet, dass** die Unterstützungsschicht (5) wenigstens eine der Ausnehmungen (7) überbrückend auf der Druckunterlage (4) aufgetragen wird.

8. Verfahren nach Anspruch 5, 6 oder 7, **dadurch gekennzeichnet, dass** das Grünteil (8) in Folge der Entfernung der Unterstützungsschicht (5) in Anlage an die Negativform gelangt.

9. Vorrichtung zur stereolithographischen additiven Fertigung von metallischen oder keramischen Grünteilen (8), insbesondere zur Durchführung eines Verfahrens nach einem der Ansprüche 1 bis 8, umfassend
- eine Unterlage (2) für eine Materialschicht eines zu polymerisierenden Materials, deren Oberfläche eine Bauebene ausbildet,
- eine Bauplattform (3), die zwischen einer mit der Bauebene bündigen Position und einer abgesenkten Position senkrecht zur Bauebene verfahrbar ist,
- eine parallel zur Bauebene verfahrbare Rakel (6) zum Auftragen der Materialschicht auf der Bauebene, und
- eine Belichtungseinheit (1) zur ortsselektiven Belichtung der Materialschicht oberhalb der Bauplattform (3) oder auf einem auf der Bauplattform (3) teilweise aufgebauten Grünteil,
**dadurch gekennzeichnet, dass** eine Druckunterlage (4) entnehmbar auf der Bauplattform (3) angeordnet ist, die eine Ausnehmungen (7) aufweisende Fläche (4a) aufweist, auf welche vor dem Aufbauen des Grünteils (8) eine Unterstützungsschicht (5) aufbringbar ist.

10. Vorrichtung nach Anspruch 9, **dadurch gekennzeichnet, dass** die Ausnehmungen (7) als Kanäle oder Rinnen ausgebildet sind oder mit diesen in Verbindung stehen.

11. Vorrichtung nach Anspruch 9 oder 10, **dadurch gekennzeichnet, dass** die Ausnehmungen (7) Flächen (11, 12, 13) aufweisen, die eine Negativform des Grünteils (8) oder Abschnitte der Negativform ausbilden.

## Claims

1. A method for additive manufacturing of at least one metallic or ceramic component, comprising:
a) building up at least one green part (8) layer by layer in a printing device from a plurality of green part layers, wherein the following steps are carried out for each green part layer:
- applying a layer of polymerizable material mixed with ceramic or metal particles to form a material layer,
- location-selectively polymerizing the material layer to obtain a location-selectively polymerized green part layer, leaving an unpolymerized amount of material surrounding the green part layer,
so that the at least one green part (8) is obtained in a material block (9) of unpolymerized material,
b) removing the at least one green part (8) from the printing device,
c) removing the unpolymerized material from the green part (8) ,
d) debinding of the at least one green part (8), and
e) sintering of the at least one green part (8) to obtain the component,
**characterized in that**
- before step a), a support layer (5) is applied to a surface (4a) of a printing support (4) having recesses (7), so that the green part (8) is built up in layers on the support layer (5) in step a),
- the at least one green part (8) is removed from the printing device in step b) while lying on the printing support (4), and
- the unpolymerized material removed in step c) is collected in the recesses (7) of the printing support (4) or said unpolymerized material is drained off through the recesses (7).

2. The method according to claim 1, **characterized in that** the support layer (5) is made of the polymerizable material mixed with ceramic or metal particles.

3. The method according to claim 1 or 2, **characterized in that** the removal of the unpolymerized material in step c) comprises allowing the material to flow off, preferably as a result of the action of heat.

4. The method according to claim 1, 2 or 3, **characterized in that** the recesses (7) are formed as channels or troughs or are connected to channels or troughs.

5. The method according to any one of claims 1 to 4, **characterized in that** the support layer (5) is removed prior to step d) or e), preferably by allowing the material to flow off, for example as a result of the action of heat.

6. The method according to any one of claims 1 to 5, **characterized in that** the recesses (7) have surfaces (11, 12, 13) that form a negative shape of the component or portions of the negative shape.

7. The method according to any one of claims 1 to 6, **characterized in that** the support layer (5) is applied to the printing support (4) bridging at least one of the recesses (7).

8. The method according to claim 5, 6 or 7, **characterized in that** the green part (8) comes into contact with the negative shape as a result of the removal of the support layer (5).

9. An apparatus for stereolithographic additive manufacturing of metallic or ceramic green parts (8), in particular for carrying out a method according to any one of claims 1 to 8, comprising
- a support (2) for a material layer of a material to be polymerized, the surface of which forming a building plane,
- a build platform (3) being movable in a perpendicular direction relative to the building plane between a position flush with the building plane and a lowered position,
- a doctor blade (6) movable parallel to the building plane for applying the material layer on the building plane, and
- an irradiating unit (1) for location-selective irradiation of the material layer above the build platform (3) or on a green part partially built up on the build platform (3), **characterized in that** a printing support (4) is removably arranged on the build platform (3), which has a surface (4a) having recesses (7), onto which a support layer (5) can be applied before the green part (8) is built up.

10. The apparatus according to claim 9, **characterized in that** the recesses (7) are formed as channels or troughs or are in communication with channels or troughs.

11. The apparatus according to claim 9 or 10, **characterized in that** the recesses (7) have surfaces (11, 12, 13) forming a negative shape of the green part (8) or portions of the negative shape.

## Revendications

1. Procédé de fabrication additive d'au moins une pièce métallique ou céramique, comprenant :
a) construction en couches d'au moins une ébauche (8) dans un dispositif d'impression à partir de plusieurs couches d'ébauche, les étapes suivantes étant exécutées pour chaque couche d'ébauche :
- application d'une couche d'un matériau polymérisable, mélangé avec des particules de céramique ou de métal, pour former une couche de matériau,
- polymérisation sélective en fonction de l'emplacement de la couche de matériau, pour obtenir une couche d'ébauche polymérisée sélectivement en fonction de l'emplacement, une quantité de matériau non polymérisé restant autour de la couche d'ébauche,
de sorte que l'au moins une ébauche (8) est obtenue dans un bloc de matériau (9) non polymérisé,
b) retrait de l'au moins une ébauche (8) du dispositif d'impression,
c) enlèvement du matériau non polymérisé de l'ébauche (8),
d) désencrage de l'au moins une ébauche (8), et
e) frittage de l'au moins une ébauche (8), pour obtenir la pièce,
**caractérisé en ce que**
- avant l'étape a), une couche de support (5) est appliquée sur une surface (4a) d'une plaque d'impression (4) présentant des cavités (7), de sorte que l'ébauche (8) est construite en couches sur la couche de support (5) lors de l'étape a),
- l'au moins une ébauche (8) est retirée du dispositif d'impression en reposant sur la plaque d'impression (4) lors de l'étape b) et
- le matériau non polymérisé retiré à l'étape c) est recueilli dans les cavités (7) de la plaque d'impression (4) ou évacué par les cavités (7).

2. Procédé selon la revendication 1, **caractérisé en ce que** la couche de support (5) est fabriquée à partir du matériau polymérisable mélangé avec des particules de céramique ou de métal.

3. Procédé selon la revendication 1 ou 2, **caractérisé en ce que** l'enlèvement du matériau non polymérisé à l'étape c) comprend le drainage du matériau, de préférence sous l'effet de la chaleur.

4. Procédé selon la revendication 1, 2 ou 3, **caractérisé en ce que** les cavités (7) sont conçues comme des canaux ou des rainures ou sont en communication avec celles-ci.

5. Procédé selon l'une quelconque des revendications 1 à 4, **caractérisé en ce que** la couche de support (5) est retirée avant l'étape d) ou e), de préférence par drainage du matériau, par exemple sous l'effet de la chaleur.

6. Procédé selon l'une quelconque des revendications 1 à 5, **caractérisé en ce que** les cavités (7) présentent des surfaces (11, 12, 13) qui forment un moule négatif de la pièce ou des sections du moule négatif.

7. Procédé selon l'une quelconque des revendications 1 à 6, **caractérisé en ce que** la couche de support (5) est appliquée sur la plaque d'impression (4) de manière à enjamber au moins l'une des cavités (7).

8. Procédé selon la revendication 5, 6 ou 7, **caractérisé en ce que** l'ébauche (8) atteint le moule négatif suite à l'enlèvement de la couche de support (5).

9. Dispositif pour la fabrication additive stéréolithographique d'ébauches métalliques ou céramiques (8), en particulier pour la mise en oeuvre d'un procédé selon l'une quelconque des revendications 1 à 8, comprenant
- un support (2) pour une couche de matériau à polymériser, dont la surface forme un plan de construction,
- une plateforme de construction (3), qui peut être déplacée entre une position alignée avec le plan de construction et une position abaissée perpendiculairement au plan de construction,
- une raclette (6) déplaçable parallèlement au plan de construction pour l'application de la couche de matériau sur le plan de construction, et
- une unité d'exposition (1) pour l'exposition sélective en fonction de l'emplacement de la couche de matériau au-dessus de la plateforme de construction (3) ou sur une ébauche partiellement construite sur la plateforme de construction (3),
**caractérisé en ce qu'**une plaque d'impression (4) est disposée de manière amovible sur la plateforme de construction (3), laquelle présente une surface (4a) comportant des cavités (7), sur laquelle une couche de support (5) peut être appliquée avant la construction de l'ébauche (8).

10. Dispositif selon la revendication 9, **caractérisé en ce que** les cavités (7) sont conçues comme des canaux ou des rainures ou sont en communication avec celles-ci.

11. Dispositif selon la revendication 9 ou 10, **caractérisé en ce que** les cavités (7) présentent des surfaces (11, 12, 13) qui forment un moule négatif de l'ébauche (8) ou des sections du moule négatif.
